# EUROPEAN PATENT APPLICATION

(11) **EP 4 783 490 A1**
(43) Date of publication of application: **29.07.2026**
(21) Application number: 24870529.5
(22) Date of filing: 18.09.2024
(51) Int. Cl.: H04B 17/391

(54) **CHANNEL FEATURE MAP DETERMINATION METHOD AND APPARATUS**

(30) Priority: 28.09.2023 CN 202311289757
(71) Applicant: HUAWEI TECHNOLOGIES CO., LTD., Shenzhen 518129 (CN)
(72) Inventor: QIN, Qibo, Shenzhen, Guangdong 518129 (CN); LING, Cen, Shenzhen, Guangdong 518129 (CN); CHEN, Shujing, Shenzhen, Guangdong 518129 (CN); PENG, Jinlin, Shenzhen, Guangdong 518129 (CN)
(74) Representative: Gill Jennings & Every LLP
(86) International application number: PCT/CN2024/119424
(87) International publication number: WO 2025/066985

(57) **Abstract**

A channel characteristic map determination method and an apparatus, related to the communication field, are provided to determine a high-accuracy channel characteristic map. In this method, a terminal device and/or an access network device sense/senses an environment based on a communication pilot signal and a sensing device such as a radar, an infrared sensor, a camera, or a point cloud laser scanner, to obtain material information of a scatterer and relative position information between the scatterer and the terminal device and/or the access network device, and transmit/transmits the foregoing information to a channel characteristic map management apparatus by using a first message. The channel characteristic map management apparatus determines a channel characteristic map based on the first message, to obtain the high-accuracy channel characteristic map.

## Description

This application claims priority to Chinese Patent Application No. 202311289757.2, filed with the China National Intellectual Property Administration on September 28, 2023 and entitled "CHANNEL CHARACTERISTIC MAP DETERMINATION METHOD AND APPARATUS", which is incorporated herein by reference in its entirety.

### TECHNICAL FIELD

This application relates to the communication field, and in particular, to a channel characteristic map determination method and an apparatus.

### BACKGROUND

In development of a 5th generation (5th generation, 5G) mobile communication system to a 6th generation (6th generation, 6G) mobile communication system, a contradiction between a sharp increase in radio channel dimensions and a limitation on pilot measurement resources is increasingly severe, posing a significant challenge to high-accuracy measurement of a radio channel. To resolve the problem of limited pilot measurement resources in a wireless communication system, a channel characteristic map may be used to implement channel measurement with low pilot overheads.

In a related technology, a channel characteristic map may be obtained by using a channel twin technology. Specifically, the channel characteristic map may be obtained based on a deterministic channel modeling solution. However, this method highly depends on accuracy of environment modeling. When an actual environment is complex, accuracy of the channel characteristic map obtained by using this method is low.

### SUMMARY

This application provides a channel characteristic map determination method and an apparatus, to determine a high-accuracy channel characteristic map.

To achieve the foregoing objectives, embodiments of this application provide the following technical solutions.

According to a first aspect, this application provides a channel characteristic map determination method, applied to a channel characteristic map management apparatus. The method includes: The channel characteristic map management apparatus receives a first message from an access network device, where the first message includes first information, the first message further includes at least one of second information and third information, the first information indicates a material or an electromagnetic coefficient of a first scatterer, the second information indicates a relative position relationship between the first scatterer and a first terminal device, and the third information indicates a relative position relationship between the first scatterer and the access network device; and then the channel characteristic map management apparatus determines a channel characteristic map based on the first message, where the channel characteristic map includes a plurality of grids on a geographical position basis and channel characteristic information corresponding to each of the plurality of grids.

Optionally, the channel characteristic map may be understood as a database, and is configured to store a channel characteristic corresponding to a geographical position. The channel characteristic includes at least one of channel statistical covariance matrix information, channel angular power spectrum information, channel power delay spectrum information, and channel path loss information. Optionally, the channel characteristic map may further store other information that represents a spatial domain, a time domain, a frequency domain, an angular domain, a Doppler domain, or a delay domain channel characteristic. This is not limited in this embodiment of this application.

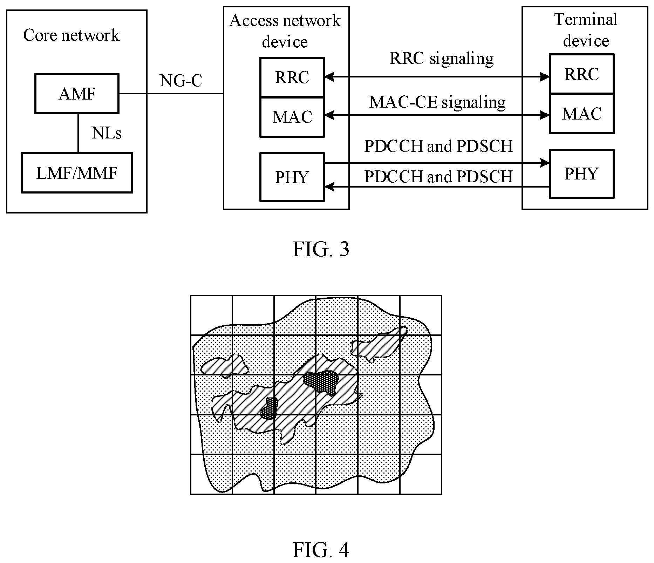

The second information or the third information may be used to determine a position of the first scatterer, so as to determine the channel characteristic map. An example of the channel characteristic map is illustrated in FIG. 4. A physical cell may be divided into two-dimensional grids or three-dimensional grids, and for each grid, a channel characteristic corresponding to a geographical position is stored. The material or the electromagnetic coefficient of the first scatterer can improve accuracy of electromagnetic calculation, thereby improving accuracy of the channel characteristic map.

In a possible implementation, the method further includes: The channel characteristic map management apparatus receives a first channel characteristic map request message from the access network device, where the first channel characteristic map request message is used to request to transmit a channel characteristic map corresponding to the first terminal device or the access network device; and the channel characteristic map management apparatus transmits a channel characteristic map response message to the access network device, where the channel characteristic map response message includes the channel characteristic map corresponding to the first terminal device or the access network device.

For example, based on the first channel characteristic map request message, the channel characteristic map management apparatus delivers a channel characteristic map corresponding to an area within the coverage of the access network device, or a channel characteristic map grid index corresponding to an area within the coverage of the access network device; or delivers a channel characteristic map corresponding to an area within the coverage of another access network device adjacent to the access network device, or a channel characteristic map grid index corresponding to an area within the coverage of another access network device adjacent to the access network device; or delivers a channel characteristic map corresponding to a grid in which the first terminal device is located, or a channel characteristic map grid index corresponding to a grid in which the first terminal device is located; or delivers a channel characteristic map corresponding to a grid within a specific distance range of the first terminal device, or a channel characteristic map grid index corresponding to a grid within a specific distance range of the first terminal device. In this way, the access network device can obtain required high-accuracy channel characteristic map information, to implement channel measurement with low pilot overheads.

In a possible implementation, the first message further includes outline information of the first scatterer.

Optionally, the outline information of the first scatterer may be represented by coordinates. When the first scatterer is a dynamic scatterer, the channel characteristic map management apparatus may determine, based on the outline information of the first scatterer, an area in which the first scatterer may change dynamically. In this way, the channel characteristic map management apparatus may update a channel characteristic map of the area in which the first scatterer may change dynamically, to further improve accuracy of the channel characteristic map, and does not update all channel characteristic maps, thereby reducing resources.

In a possible implementation, the first message further includes channel multipath information, and the channel multipath information includes at least one of multipath quantity information, multipath angular spread information, and multipath delay spread information.

Optionally, the channel characteristic map management apparatus may determine a complex multipath area and a simple multipath area based on the channel multipath information, and construct or update the channel characteristic map by using different methods for different areas. In this way, a high-accuracy channel characteristic map is obtained in a simple and efficient manner.

For example, for the complex multipath area, a channel characteristic map may be constructed by using a full-wave simulation method with relatively high calculation complexity, to obtain the high-accuracy channel characteristic map. For the simple multipath area, a channel characteristic map may be constructed by using a ray tracing method with relatively low calculation complexity, to obtain the high-accuracy channel characteristic map, and a requirement on a compute resource and time can be reduced.

In a possible implementation, the first message further includes configuration information of the access network device. The configuration information of the access network device includes position information of the access network device and/or antenna information of the access network device. The antenna information includes at least one of antenna height information, antenna size information, antenna type information, antenna downtilt angle information, antenna pattern information, and antenna main lobe direction information. In this way, the channel characteristic map management apparatus may further determine the channel characteristic map based on the configuration information of the access network device, thereby further improving accuracy of the channel characteristic map.

In a possible implementation, the first message further includes at least one of a mobility identifier of the first scatterer, moving speed information of the first scatterer, and moving direction information of the first scatterer. In this way, the channel characteristic map management apparatus may determine, based on the mobility identifier of the first scatterer, whether the first scatterer moves, determine information such as the moving speed and the moving direction of the first scatterer, and determine the area in which the first scatterer may change dynamically based on these information. In this way, the channel characteristic map management apparatus may update the channel characteristic map of the area in which the first scatterer may change dynamically, to further improve accuracy of the channel characteristic map, and does not update all channel characteristic maps, thereby reducing resources.

In a possible implementation, the first message further includes a first channel measurement result. The first channel measurement result includes at least one of channel state information, channel statistical covariance matrix information, channel angular power spectrum information, channel power delay spectrum information, and channel path loss information.

Optionally, the first channel measurement result further includes other information that represents a spatial domain, a time domain, a frequency domain, an angular domain, a Doppler domain, or a delay domain channel characteristic. This is not limited in this embodiment of this application.

In this way, the channel characteristic map management apparatus may directly update channel characteristic data of a corresponding grid based on the first channel measurement result, to obtain a high-accuracy channel characteristic map in an efficient manner.

In a possible implementation, before receiving the first message, the method includes: transmitting a first request to the access network device, where the first request indicates the access network device to transmit the first message; or transmitting a second request to the first terminal device, where the second request indicates the first terminal device to transmit a second message, and the second message includes the first information and the second information.

Optionally, the channel characteristic map management apparatus may transmit the first request within a specific time interval. For example, the first request is sent once every hour. Optionally, when a plurality of scatterers sensed by the channel characteristic map management apparatus does not move, a time interval for transmitting the first request may be prolonged, for example, the first request is sent once every 24 hours. Optionally, when the plurality of scatterers sensed by the channel characteristic map management apparatus move, the time interval for transmitting the first request may be shortened, for example, the first request is sent once every 10 minutes. Alternatively, the second request is sent once every hour. Optionally, when the plurality of scatterers sensed by the channel characteristic map management apparatus do not move, a time interval for transmitting the second request may be prolonged, for example, the second request is sent once every 24 hours. Optionally, when the plurality of scatterers sensed by the channel characteristic map management apparatus move, the time interval for transmitting the second request may be shortened, for example, the second request is sent once every 10 minutes. In this way, the channel characteristic map can be updated in time, and an amount of data processed by the channel characteristic map management apparatus is reduced.

According to a second aspect, this application provides a channel characteristic map construction method, applied to an access network device. The method includes: transmitting a first message to a channel characteristic map management apparatus, where the first message includes first information, the first message further includes at least one of second information and third information, the first information indicates a material or an electromagnetic coefficient of a first scatterer, the second information indicates a relative position relationship between the first scatterer and a first terminal device, and the third information indicates a relative position relationship between the first scatterer and the access network device.

In a possible implementation, the method further includes: receiving a second message from the first terminal device, where the second message includes the first information and the second information.

In a possible implementation, the method further includes: transmitting a first channel characteristic map request message to the channel characteristic map management apparatus, where the first channel characteristic map request message is used to request to transmit a channel characteristic map corresponding to the first terminal device or the access network device; and receiving a first channel characteristic map response message from the channel characteristic map management apparatus, where the first channel characteristic map response message includes the channel characteristic map corresponding to the first terminal device or the access network device.

In a possible implementation, the method further includes: receiving a second channel characteristic map request message from the first terminal device, where the second channel characteristic map request message is used to request to transmit the channel characteristic map corresponding to the first terminal device; and transmitting a second channel characteristic map response message to the first terminal device, where the second channel characteristic map response message includes the channel characteristic map corresponding to the first terminal device.

In a possible implementation, the first message further includes fourth information, and the fourth information indicates an outline of the first scatterer.

In a possible implementation, the second message further includes the fourth information, and the fourth information indicates the outline of the first scatterer.

In a possible implementation, the first message further includes channel multipath information, and the channel multipath information indicates at least one of multipath quantity information, angular spread information, and delay spread information.

In a possible implementation, the second message further includes channel multipath information of a position of the first terminal device, and the channel multipath information indicates at least one of the multipath quantity information, the angular spread information, and the delay spread information.

In a possible implementation, the first message further includes configuration information of the access network device. The configuration information of the access network device includes at least one of position information of the access network device, an antenna height of the access network device, an antenna size of the access network device, an antenna type of the access network device, an antenna downtilt angle of the access network device, an antenna pattern of the access network device, and an antenna main lobe direction of the access network device.

In a possible implementation, the first message further includes at least one of a mobility identifier of the first scatterer, a moving speed of the first scatterer, and a moving direction of the first scatterer.

In a possible implementation, the second message further includes at least one of the mobility identifier of the first scatterer, the moving speed of the first scatterer, and the moving direction of the first scatterer.

In a possible implementation, the first message further includes a first channel measurement result. The first channel measurement result includes at least one of channel state information, channel statistical covariance matrix information, channel angular power spectrum information, channel power delay spectrum information, and channel path loss information.

In a possible implementation, before transmitting the first message, the method includes:
receiving a first request, where the first request indicates the access network device to transmit the first message.

According to a third aspect, this application provides a channel characteristic map construction method, applied to a first terminal device. The method includes: transmitting a second message to an access network device, where the second message includes first information and second information, the first information indicates a material or an electromagnetic coefficient of a first scatterer, and the second information indicates a relative position relationship between the first scatterer and the first terminal device.

In a possible implementation, the method further includes: transmitting a second channel characteristic map request message to the access network device, where the second channel characteristic map request message is used to request to transmit a channel characteristic map corresponding to the first terminal device; and receiving a channel characteristic map response message from the access network device, where the channel characteristic map response message includes the channel characteristic map corresponding to the first terminal device.

In a possible implementation, the second message further includes fourth information, and the fourth information indicates an outline of the first scatterer.

In a possible implementation, the second message further includes channel multipath information, and the channel multipath information indicates at least one of multipath quantity information, angular spread information, and delay spread information.

In a possible implementation, the second message further includes at least one of a mobility identifier of the first scatterer, a moving speed of the first scatterer, and a moving direction of the first scatterer.

According to a fourth aspect, this application provides a communication apparatus. The communication apparatus includes a processor and an interface circuit. The interface circuit is configured to: receive a signal from another communication apparatus and transmit the signal to the processor, or transmit a signal from the processor to the another communication apparatus. The processor is configured to implement the method according to any one of the first aspect to the third aspect through a logic circuit or by executing code instructions.

According to a fifth aspect, this application provides a computer-readable storage medium. The storage medium stores a computer program or instructions, and when the computer program or the instructions are executed by a communication apparatus, the method according to any one of the first aspect to the third aspect is implemented.

According to a sixth aspect, this application provides a chip system. The chip system includes a processor and an input/output port. The processor is configured to implement the channel characteristic map determination method according to any one of the foregoing aspects, and the input/output port is configured to implement receiving and transmitting functions in the channel characteristic map determination method according to any one of the foregoing aspects.

In a possible design, the chip system further includes a memory, and the memory is configured to store program instructions and data that are used to implement a function of the channel characteristic map determination method according to any one of the foregoing aspects.

The chip system may include a chip, or may include a chip and another discrete device.

According to a seventh aspect, a communication system is provided. The system includes one or more terminal devices, one or more access network devices, and a channel characteristic map management apparatus.

According to an eighth aspect, a computer program product is provided. The computer program product includes a computer program or instructions. When the computer program or the instructions are run on a computer, the computer is enabled to perform the channel characteristic map determination method according to any one of the foregoing aspects.

For technical effects corresponding to the second aspect to the eighth aspect and any implementation of the second aspect to the eighth aspect, refer to the technical effects corresponding to any implementation of the first aspect. Details are not described herein again.

### BRIEF DESCRIPTION OF DRAWINGS

FIG. 1 is a diagram of a channel characteristic map determined in a related technology;
FIG. 2 is a diagram of a communication system according to an embodiment of this application;
FIG. 3 is a diagram of communication system interaction according to an embodiment of this application;
FIG. 4 is a diagram of a channel characteristic map according to an embodiment of this application;
FIG. 5 is a flowchart of a channel characteristic map determination method according to an embodiment of this application;
FIG. 6 is a diagram of a coordinate according to an embodiment of this application;
FIG. 7 is a diagram of another coordinate according to an embodiment of this application;
FIG. 8 is a diagram of another channel characteristic map according to an embodiment of this application;
FIG. 9 is a flowchart of another channel characteristic map determination method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

The terms "including", "having", and any variants thereof mentioned in the descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner.

In the descriptions of embodiments of this application, unless otherwise stated, "a plurality of" means two or more. The term "and/or" in this specification describes only an association relationship between associated objects and indicates that there may be three relationships. For example, A and/or B may represent the following three cases: Only A exists, both A and B exist, and only B exists.

In embodiments of this application, "at least one" may alternatively be described as one or more, and "a plurality of" may be two, three, four, or more. This is not limited in this application.

In embodiments of this application, "first", "second", "third", "A", "B", "C", "D", and the like are used for distinguishing between technical features described by them. There is no chronological order or no size order between the technical features described by "first", "second", "third", "A", "B", "C", and "D".

A digital twin technology is crucial in the evolution from 5G and 5G advanced to 6G. The digital twin technology is an important technology that models, simulates, optimizes, and visualizes a physical world in a virtual world. In a digital twin system, the physical world provides perception data for building the virtual world, and the virtual world provides simulation data for guiding a system design and algorithm optimization of the physical world.

For the digital twin system, construction of a channel twin is one of core links. The channel twin is a real, objective, and complete mapping of physical channel information in digital space, including a geometric model and a physical model. With the advent of a 6G mobile communication era, increases in system bandwidth, a quantity of antennas in a terminal device, and network load aggravate a contradiction between a sharp increase in radio channel dimensions and a limitation on pilot measurement resources, posing a significant challenge to high-accuracy measurement of a radio channel. To resolve the problem of limited pilot measurement resources in a wireless communication system, a channel characteristic map may be used to implement channel measurement with low pilot overheads.

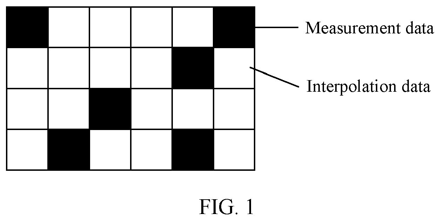

In some embodiments, as shown in FIG. 1, measurement data of some areas may be obtained by actually measuring a channel characteristic, and interpolation data of another area may be obtained based on the measurement data and an interpolation algorithm, to determine a channel characteristic map of an entire area. However, it is difficult to obtain the measurement data for this method, resulting in low accuracy of a channel characteristic map in some areas.

In some other embodiments, a channel characteristic map may be obtained by using a channel twin technology. Specifically, the channel characteristic map may be constructed based on a deterministic channel modeling solution. With reference to a prior environment map, line-of-sight propagation, reflection, diffraction, transmission, and scattering of a communication multipath are simulated by using electromagnetic simulation calculation, to obtain a deterministic channel model, and the channel characteristic map is determined based on the deterministic channel model.

However, the method highly depends on accuracy of environment modeling, and environment modeling accuracy of an existing business map is usually low, typically only at a meter level. The deterministic channel model is not accurate enough, and accuracy of the channel characteristic map constructed based on the deterministic channel model is low. In addition, currently, a ray tracing method is usually used for electromagnetic simulation calculation. When an actual environment is complex, a deterministic channel model based on ray tracing is usually not accurate enough, and a channel characteristic map constructed based on the deterministic channel model has low accuracy.

To resolve the foregoing technical problem, an embodiment of this application provides a channel characteristic map determination method. In the method, a terminal device and/or an access network device sense/senses an environment based on a communication pilot signal and a sensing device such as a radar, an infrared sensor, a camera, or a point cloud laser scanner, to obtain a first message such as a material of a scatterer, and relative position information between the scatterer and the terminal device and/or the access network device, and transmit/transmits the first message to a channel characteristic map management apparatus. The channel characteristic map management apparatus determines a channel characteristic map (which may also be referred to as a channel knowledge map, a channel chart, a channel map, or the like) based on the first message. In this way, a high-accuracy channel characteristic map is obtained.

Optionally, the scatterer in this embodiment of this application includes an object that can affect an original propagation direction of a signal through line-of-sight propagation, reflection, scattering, refraction, diffraction, or the like.

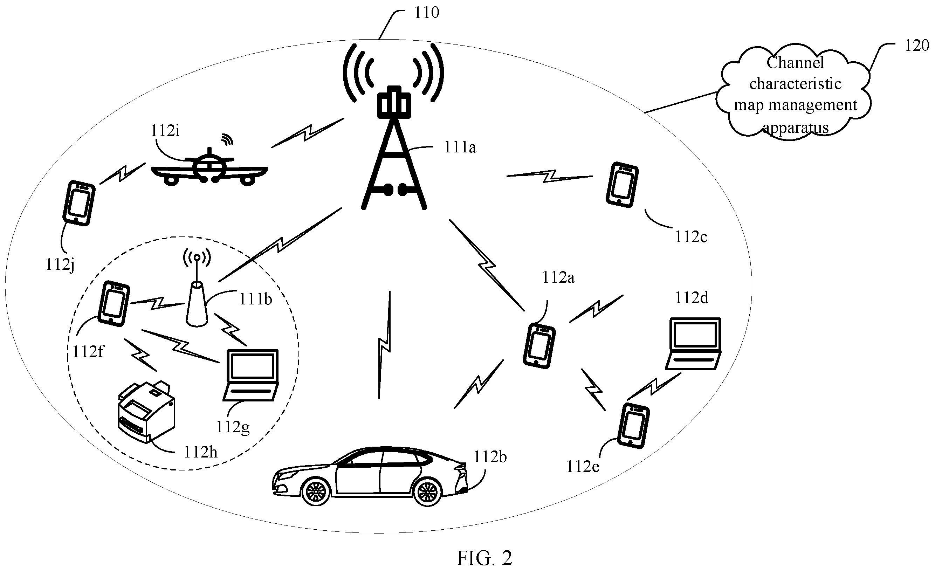

FIG. 2 is a diagram of an architecture of a communication system 1000 to which an embodiment of this application is applied. As shown in FIG. 2, the communication system includes a radio access network (radio access network, RAN) 100. The RAN 100 includes at least one RAN node (for example, 110a and 110b in FIG. 2, collectively referred to as 110), and may further include at least one terminal (for example, 120a to 120j in FIG. 2, collectively referred to as 120). The RAN 100 may further include another RAN node, for example, a wireless relay device and/or a wireless backhaul device (not shown in FIG. 2). The terminal 120 is connected to the RAN node 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node.

This embodiment of this application further includes a channel characteristic map management apparatus (not shown in FIG. 2). The channel characteristic map management apparatus may determine a channel characteristic map. The channel characteristic map management apparatus may be located in a core network element, an access network device, or another device. This is not specifically limited in this embodiment of this application.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may also be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or an access node in a Wi-Fi system. The RAN node may be a macro base station (for example, 110a in FIG. 2), may be a micro base station or an indoor base station (for example, 110b in FIG. 2), or may be a relay node or a donor node.

In another application scenario, a plurality of RAN nodes may cooperate to help a terminal implement radio access, and different RAN nodes separately implement some functions of the base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes: CU-control plane and CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which a base station is used as a RAN node.

A terminal is a device having a wireless transceiver function, and may transmit a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), Internet of things (Internet of things, IOT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 2 may be configured as a mobile base station. For a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 2 may be referred to as communication apparatuses having a base station function, and 120a to 120j in FIG. 2 may be referred to as communication apparatuses having a terminal function.

Communication between the base station and the terminal, between the base station and the base station, or between the terminal and the terminal may be performed through a licensed spectrum, or may be performed through an unlicensed spectrum, or may be performed through both the licensed spectrum and the unlicensed spectrum. Communication may be performed through a spectrum below 6 gigahertzes (gigahertz, GHz), or may be performed through a spectrum above 6 GHz, or may be performed through both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus having the function of the terminal.

The technical solutions provided in embodiments of this application may be applied to wireless communication between communication devices. Wireless communication between communication devices may include: wireless communication between a core network element and a base station, wireless communication between a core network element and a terminal, wireless communication between base stations, wireless communication between a base station and a terminal, and wireless communication between terminals. In embodiments of this application, the term "wireless communication" may also be referred to as "communication" for short, and the term "communication" may also be described as "data transmission", "information transmission", or "transmission".

In this application, the base station transmits a downlink signal or downlink information to the terminal, where the downlink information is carried on a downlink channel; and the terminal transmits an uplink signal or uplink information to the base station, where the uplink information is carried on an uplink channel.

As shown in FIG. 3, a terminal and a base station include a radio resource control (radio resource control, RRC) signaling interaction module (which may also be referred to as an RRC entity), and transmission between the terminal and the base station may be implemented by using RRC signaling (RRC entity).

The terminal and the base station further include a medium access control (medium access control, MAC) signaling interaction module (which may also be referred to as a MAC entity), and transmission between the terminal and the base station may be implemented by using a MAC control element (MAC control element) signaling (MAC entity).

The terminal and the base station further include a physical layer (physical layer, PHY) signaling and data exchange module (which may also be referred to as a PHY entity). The terminal and the base station may interact with each other through a physical downlink control channel (physical downlink control channel, PDCCH), a physical downlink shared channel (physical downlink shared channel, PDSCH), a physical uplink control channel (physical uplink control channel, PUCCH), or a physical uplink shared channel (physical uplink shared channel, PUSCH).

Optionally, the terminal and the base station may further include another module (or a protocol entity), to implement the solutions provided in embodiments of this application.

Optionally, a core network may include an access and mobility management function (access and mobility management function, AMF) entity, and the base station communicates with the AMF through a next generation core (next generation core, NG-C) interface. The core network further includes a location management function (location management function, LMF) entity, configured to implement position estimation of the terminal, and further configured to determine a channel characteristic map.

Alternatively, in another possible implementation, the core network further includes a map management function (map management function, MMF) entity, and may determine a channel characteristic map. The AMF communicates with the LMF/MMF through an NLs interface.

Optionally, the channel characteristic map may be understood as a database, and is configured to store a channel characteristic corresponding to a geographical position. The channel characteristic includes at least one of channel statistical covariance matrix information, channel angular power spectrum information, channel power delay spectrum information, and channel path loss information.

Optionally, the channel characteristic map may further store other information that represents a spatial domain, a time domain, a frequency domain, an angular domain, a Doppler domain, or a delay domain channel characteristic. This is not limited in this embodiment of this application.

FIG. 4 shows an example of a channel characteristic map. In the channel characteristic map, a physical cell may be divided into two-dimensional grids, and for each grid, a channel characteristic corresponding to a geographical position is stored in a form of a matrix, a vector, or a scalar. Optionally, the physical cell may be divided into three-dimensional grids, and for each grid, a channel characteristic corresponding to a geographical position is stored in a form of a matrix, a vector, or a scalar. This is not limited in this embodiment of this application. It should be understood that an edge of each grid is not necessarily a straight line, and grids of different shapes may be obtained in different geographical positions.

For example, each grid in the channel characteristic map stores at least one of channel statistical covariance matrix information, channel angular power spectrum information, channel power delay spectrum information, and channel path loss information of a corresponding geographical position area. The channel statistical covariance matrix information is represented in a form of a matrix, the channel angular power spectrum information and the channel power delay spectrum information is represented in a form of a vector, and the channel path loss information is represented in a form of a scalar.

Optionally, the channel characteristic map further corresponds to a channel characteristic map grid index.

For example, each grid in the channel characteristic map corresponds to a number. As shown in FIG. 4, a number of a grid in a first row and a first column is 1, the grid stores a channel characteristic 1 of a corresponding position, a number of a grid in the first row and a second column is 2, the grid stores a channel characteristic 2 of a corresponding position, ..., a number of a grid in an a^{th} row and a b^{th} column is n, the grid stores a channel characteristic n of a corresponding position, and the like. Each number corresponds to a channel characteristic in a grid. For details, refer to Table 1.

**Table 1**

| Number | Channel characteristics |
|---|---|
| 1 | Channel characteristic 1 |
| 2 | Channel characteristic 2 |
| ... | |
| n | Channel characteristic n |

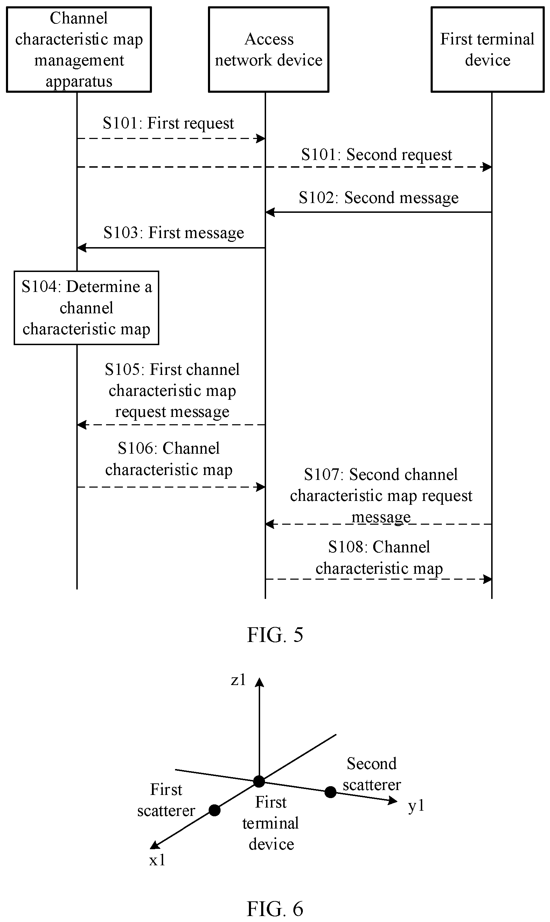

For example, FIG. 5 is a flowchart of a channel characteristic map determination method according to an embodiment of this application. The channel characteristic map determination method is applicable to the communication system shown in FIG. 2.

As shown in FIG. 5, the channel characteristic map determination method includes the following steps.

S101: A channel characteristic map management apparatus transmits a first request to an access network device, or transmits a second request to a first terminal device.

The channel characteristic map management apparatus may determine a channel characteristic map. Specifically, the channel characteristic map management apparatus may construct the channel characteristic map, or may update an original channel characteristic map.

In an embodiment, the channel characteristic map management apparatus may be configured with a three-dimensional high-accuracy map, and the channel characteristic map management apparatus determines the channel characteristic map based on the three-dimensional high-accuracy map.

Optionally, the channel characteristic map management apparatus may be located in a core network element, or may be located in the access network device (or a base station). This is not specifically limited in this embodiment of this application.

Optionally, the channel characteristic map management apparatus may transmit a new radio positioning protocol annex (new radio positioning protocol annex, NRPPa) message to the access network device, where the new radio positioning protocol annex carries the first request.

The first request may indicate the access network device to transmit a first message to the channel characteristic map management apparatus. The first message includes a plurality of pieces of information needed for determining the channel characteristic map corresponding to an area within coverage of the access network device.

Optionally, the channel characteristic map management apparatus may include the second request in an LTE positioning protocol (LTE positioning protocol, LPP) message that is sent to the first terminal device.

The second request may indicate the first terminal device to transmit a second message to the channel characteristic map management apparatus. The second message also includes the plurality of pieces of information needed for determining the channel characteristic map within a specific area centered on the first terminal device.

In an embodiment, this embodiment of this application may not include step S101, and step S102 is directly performed.

S102: The first terminal device transmits the second message to the access network device based on the first request. Accordingly, the access network device receives the second message from the first terminal device.

Optionally, the first terminal device may transmit the second message to the access network device by using RRC, a PUSCH, a MAC-CE, a PUCCH, or the like.

Optionally, the first terminal device may transmit the second message within a specific time interval. For example, the second message is sent once every hour.

Optionally, when a plurality of scatterers sensed by the first terminal device do not move, a time interval for transmitting the second message may be prolonged, for example, the second message is sent once every 24 hours. Optionally, when the plurality of scatterers sensed by the first terminal device move, the time interval for transmitting the second message may be shortened, for example, the second message is sent once every 10 minutes.

Optionally, when a density of terminal devices is high, one terminal device is selected in a specific area to transmit the second message. For example, one terminal device may be selected every 5 cubic meters to transmit the second message to the access network device.

Optionally, the second message may include first information and second information. The first information may indicate a material or an electromagnetic coefficient of a first scatterer.

Optionally, the material of the first scatterer may be concrete, glass, metal, plastic, vegetation, or the like.

For example, when the material of the first scatterer is concrete, the first information may be 1. When the material of the first scatterer is glass, the first information may be 2. When the material of the first scatterer is metal, the first information may be 3. When the material of the first scatterer is plastic, the first information may be 4. When the material of the first scatterer is vegetation, the first information may be 5. It should be understood that the material of the first scatterer may alternatively be represented in another manner. For example, when the first scatterer is concrete, the first information may be a, indicating that the material of the first scatterer is concrete. This is not specifically limited in this embodiment of this application.

Optionally, the electromagnetic coefficient of the first scatterer may include parameters such as a dielectric constant, an electrical conductivity, and a reflectivity of the first scatterer.

For example, the first scatterer is concrete, a dielectric constant of the concrete is 6, an electrical conductivity is 8 µS/cm, and a reflectivity is 50%. In this case, the first information may be "dielectric constant: 6+2i, electrical conductivity: 8 µS/cm, and reflectivity: 50%".

The second information may indicate a relative position relationship between the first scatterer and the first terminal device. The relative position relationship between the first scatterer and the first terminal device may be represented by using relative coordinates between the first scatterer and the first terminal device.

Optionally, as shown in FIG. 6, the first terminal device may establish a three-dimensional coordinate system (x1, y1, z1) by using the first terminal device as a reference point, to indicate the relative position relationship between the first scatterer and the first terminal device. Optionally, the first terminal device may transmit the three-dimensional coordinate system to the access network device, and subsequently the access network device may establish a global three-dimensional coordinate system based on three-dimensional coordinate systems of a plurality of terminal devices.

For example, a position of the first terminal device is (0, 0, 0), and coordinates of the first scatterer are (1, 0, 0), which may indicate that the first scatterer is located 1 m in front of the first terminal device.

For another example, a position of the first terminal device is (0, 0, 0), and coordinates of a second scatterer are (0, 1, 0), which may indicate that the second scatterer is located 1 m right to the first terminal device.

Optionally, the first terminal device may alternatively establish a three-dimensional coordinate system (x1, y1, z1) by using the first scatterer as a reference point, to indicate the relative position relationship between the first scatterer and the first terminal device. This is not specifically limited in this embodiment of this application.

Optionally, the second message may further include fourth information. The fourth information may indicate an outline of the first scatterer.

Optionally, the outline of the first scatterer may be coordinates of vertices of the first scatterer. The coordinates are located in the three-dimensional coordinate system (x1, y1, z1) established by using the first terminal device as a reference point.

For example, if the first scatterer is a rectangular office building, an outline of the office building may be represented by coordinates of eight vertices of the office building.

Optionally, the second message may further include channel multipath information of a position of the first terminal device. The channel multipath information indicates at least one of multipath quantity information, multipath angular spread information, and multipath delay spread information.

For example, the multipath quantity information of the position of the first terminal device is 3, the multipath angular spread information of the position of the first terminal device is 25°, and the multipath delay spread information of the position of the first terminal device is 200 ns.

Optionally, when a channel multipath quantity of the position of the first terminal device is greater than or equal to a multipath quantity threshold, or the angular spread information of the position of the first terminal device is greater than or equal to an angular threshold, or the multipath delay spread information of the position of the first terminal device is greater than or equal to a delay threshold, it may indicate that the first terminal device is in a complex multipath environment. Otherwise, the first terminal device is in a simple multipath environment.

For example, the multipath quantity threshold may be 10, the multipath angular threshold may be 40°, and the multipath delay threshold may be 400 ns. In this case, the first terminal device is located in the simple multipath environment.

For another example, multipath quantity information of a position of a second terminal device is 3, multipath angular spread information of the position of the second terminal device is 45°, and multipath delay spread information of the position of the second terminal device is 200 ns. The multipath angular spread information is greater than the multipath angular threshold. In this case, the second terminal device is located in the complex multipath environment.

In an embodiment, the second message may further include a complex multipath environment indication identifier of the position of the first terminal device.

For example, when the first terminal device is located in the complex multipath environment, the complex multipath environment indication identifier may be 1; or when the first terminal device is located in the simple multipath environment, the complex multipath environment indication identifier may be 0.

Optionally, the second message may further include at least one of a mobility identifier of the first scatterer, a moving speed of the first scatterer, and a moving direction of the first scatterer.

The mobility identifier of the first scatterer indicates whether the first scatterer moves. For example, when the first scatterer is in a moving state, the mobility identifier of the first scatterer may be 1; or when the first scatterer is in a static state, the mobility identifier of the first scatterer may be 0.

The moving speed of the first scatterer indicates a moving speed of the first scatterer. For example, the moving speed of the first scatterer is 10 m/s.

The moving direction of the first scatterer may be represented by an x-axis direction, a y-axis direction, or a z-axis direction in a three-dimensional coordinate system established by using the first terminal device as an origin. For example, the moving direction of the first scatterer is the x-axis direction.

Optionally, the second message may be obtained by the first terminal device by sensing an environment based on a communication pilot signal and a sensing device such as a radar, an infrared sensor, a camera, or a point cloud laser scanner.

S103: The access network device transmits the first message to the channel characteristic map management apparatus. Correspondingly, the channel characteristic map management apparatus receives the first message from the access network device.

Optionally, the access network device may transmit the first message within a specific time interval. For example, the first message is sent once every hour.

Optionally, when a plurality of scatterers sensed by the access network device do not move, a time interval for transmitting the first message may be prolonged, for example, the first message is sent once every 24 hours. Optionally, when the plurality of scatterers sensed by the access network device move, the time interval for transmitting the first message may be shortened, for example, the first message is sent once every 10 minutes.

In an embodiment, the access network device may transparently transmit, to the channel characteristic map management apparatus, the second message from the first terminal device. That is, the first message is the second message from the first terminal device. For details about the second message, refer to the descriptions of step 102. Details are not described herein again.

In another embodiment, the access network device may process the second message from the first terminal device to obtain the first message, and transmit the first message to the channel characteristic map management apparatus.

Optionally, the first message may include the first information, and the first message further includes at least one of the second information and the third information.

The first information may indicate the material or the electromagnetic coefficient of the first scatterer. The second information may indicate the relative position relationship between the first scatterer and the first terminal device. The third information may indicate a relative position relationship between the first scatterer and the access network device.

In an embodiment, the access network device may sense the relative position relationship between the first scatterer and the access network device.

Optionally, the access network device may establish a three-dimensional coordinate system (x1, y1, z1) by using the access network device as a reference point, to indicate the relative position relationship between the first scatterer and the access network device.

For example, a position of the access network device is (0, 0, 0), and coordinates of the first scatterer are (1, 0, 0), which may indicate that the first scatterer is located 1 m in front of the access network device.

For another example, a position of the access network device is (0, 0, 0), and coordinates of the second scatterer are (0, 1, 0), which may indicate that the second scatterer is located 1 m right to the access network device.

In another embodiment, the access network device may receive a plurality of pieces of second information from a plurality of terminal devices, and obtain the relative position relationship between the first scatterer and the access network device based on the plurality of pieces of second information.

There may be a plurality of terminal devices around the first scatterer, and each terminal device may sense a relative position relationship between the first scatterer and the terminal device in a preset range. Therefore, when the plurality of terminal devices are close to each other, the first scatterer may be sensed by the plurality of terminal devices and sent to the access network device. The access network device may process a plurality of received coordinates of the first scatterer, to obtain coordinates of the first scatterer relative to the access network device.

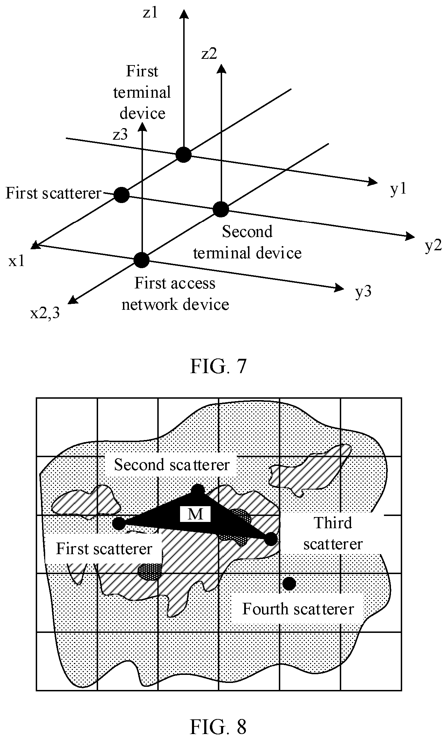

For example, as shown in FIG. 7, a first terminal device establishes a three-dimensional coordinate system (x1, y1, z1) by using the first terminal device as a reference point. Second information sent by the first terminal device includes coordinates (0, 0, 0) of the first terminal device, and coordinates (1, 0, 0) of the first scatterer.

A second terminal device establishes a three-dimensional coordinate system (x2, y2, z2) by using the second terminal device as a reference point. Second information sent by the second terminal device includes coordinates (0, 0, 0) of the second terminal device, and coordinates (0, -1, 0) of the first scatterer.

Optionally, the access network device may receive the second information sent by the first terminal device and the second information sent by the second terminal device, and establish a three-dimensional coordinate system by using the access network device as a reference point and based on the second information sent by the first terminal device and the second information sent by the second terminal device, to obtain the relative position relationship between the first scatterer and the access network device.

For example, as shown in FIG. 7, a three-dimensional coordinate system (x3, y3, z3) is established by using the second terminal device as a reference point, coordinates of the access network device are (0, 0, 0), coordinates of the first terminal device are (-2, -1, 0), and coordinates of the second terminal device are (-1, 0, 0). Based on a relative position relationship between the first scatterer and the first terminal device and a relative position relationship between the first scatterer and the second terminal device, coordinates (-1, -1, 0) of the first scatterer relative to the access network device may be obtained.

Optionally, the first message may further include channel multipath information within the coverage of the access network device. The channel multipath information indicates at least one of multipath quantity information, angular spread information, and delay spread information. Within the coverage of the access network device, channel multipath information of different positions may vary.

Specifically, the access network device may receive the channel multipath information of the position of the first terminal device, and determine the channel multipath information within the coverage of the access network device based on channel multipath information of a position of at least one terminal device.

Optionally, the access network device may further determine a complex multipath area within the coverage of the access network device based on complex multipath environment indications of positions of a plurality of terminal devices.

For example, the access network device receives complex multipath environment indications of positions of the first terminal device, the second terminal device, a third terminal device, and a fourth terminal device. The first terminal device, the second terminal device, and the third terminal device are located in the complex multipath environment, and the fourth terminal device is located in the simple multipath environment. In this case, an area including the first terminal device, the second terminal device, and the third terminal device is a complex multipath area, and another area within the coverage of the access network device is a simple multipath area.

Optionally, the first message may further include at least one of the mobility identifier of the first scatterer, the moving speed of the first scatterer, and the moving direction of the first scatterer. For details about the mobility identifier and the moving speed of the first scatterer, refer to the descriptions in step S102. Details are not described herein again.

Optionally, the moving direction of the first scatterer may be represented by an x-axis direction, a y-axis direction, or a z-axis direction in a three-dimensional coordinate system established by using the access network device as an origin.

For example, when the mobility identifier of the first scatterer is 1, it indicates that the first scatterer is in a moving state, the moving speed of the first scatterer is 10 m/s, and the moving direction of the first scatterer is the x-axis direction.

Optionally, the first message may further include configuration information of the access network device. The configuration information of the access network device includes position information of the access network device and/or antenna information of the access network device.

Optionally, the antenna information of the access network device may include at least one of antenna height information, antenna size information, antenna type information, antenna downtilt angle information, antenna pattern information, and antenna main lobe direction information.

The antenna height information indicates a vertical distance between an antenna that receives and transmits signals in the access network device and a geodetic level (or a mean sea level).

Optionally, the antenna size information includes information about a length, a width, and a height of the antenna, and may be represented by coordinates.

For example, a three-dimensional coordinate system is established by using a central position of the access network device as an origin, and the antenna size information may be represented by coordinates of vertices of the antenna.

The antenna type information may include an ultra-long wave antenna, a long wave antenna, a medium wave antenna, a short wave antenna, an ultra-short wave antenna, and a microwave antenna. It should be understood that the foregoing antenna classification is performed based on an operating wavelength of the antenna, or may be performed in another manner. For example, the antenna may be classified into a transmit antenna and a receive antenna based on an operating function of the antenna. This is not specifically limited in this embodiment of this application.

The antenna pattern information indicates a pattern in which relative field strength of a radiation field varies with a direction at a preset distance from the antenna, and is usually indicated by two plane patterns that are perpendicular to each other in a maximum radiation direction of the antenna. The antenna main lobe direction information is a direction of a maximum radiation beam in the antenna pattern.

Optionally, the first message may further include a first channel measurement result.

Optionally, the first channel measurement result indicates a channel measurement result at a position of a terminal device with a high signal to interference and noise ratio (signal to interference and noise ratio, SINR), and the channel measurement result is obtained by actual measurement. The first channel measurement result may include at least one of channel state information, channel statistical covariance matrix information, channel angular power spectrum information, channel power delay spectrum information, and channel path loss information.

Optionally, the first channel measurement result further includes other information that represents a spatial domain, a time domain, a frequency domain, an angular domain, a Doppler domain, or a delay domain channel characteristic. This is not limited in this embodiment of this application.

Specifically, the access network device may measure a channel by using a pilot signal such as a channel sounding reference signal (sounding reference signal, SRS) or a channel state information-reference signal (channel state information-reference signal, CSI-RS), to obtain channel measurement data. The access network device may receive an SRS from the first terminal device, and analyze the received SRS to estimate channel measurement data. Alternatively, the access network device may transmit a CSI-RS to the first terminal device, and the first terminal device may receive and decode the CSI-RS to estimate channel measurement data. After obtaining the channel measurement data through estimation, the first terminal device may transmit the channel measurement data to the access network device.

Optionally, the access network device may obtain, through calculation based on the channel measurement data, a signal to interference and noise ratio of a channel at a position of each terminal device. When the signal to interference and noise ratio of the channel at the position of the terminal device is greater than a preset threshold, the access network device may obtain, through calculation based on the channel measurement data, a first channel measurement result at the position of the terminal device.

Specifically, the access network device may calculate the first channel measurement result based on the first channel measurement data by using a space-alternating generalized expectation-maximization (space-alternating generalized expectation-maximization, SAGE) algorithm.

It should be understood that the access network device may further obtain the first channel measurement result through calculation based on another algorithm. This is not specifically limited in this embodiment of this application.

Optionally, the first message may be obtained by the access network device by sensing an environment based on a communication pilot signal and a sensing device such as a radar, an infrared sensor, a camera, or a point cloud laser scanner.

S104: The channel characteristic map management apparatus determines the channel characteristic map based on the first message.

The channel characteristic map includes a plurality of grids at a geographical position and channel characteristic information corresponding to each of the plurality of grids.

Optionally, the channel characteristic map management apparatus determines different channel characteristic maps at different frequencies based on the first message.

Optionally, when the channel characteristic map management apparatus is located in the core network element, the channel characteristic map management apparatus may include a map management unit MMF, and the MMF may determine the channel characteristic map based on the first message. Alternatively, the channel characteristic map management apparatus may include an access and mobility management unit AMF, and the AMF may also determine the channel characteristic map based on the first message.

Optionally, the channel characteristic map management apparatus may further determine the channel characteristic map by using another unit or network element. This is not specifically limited in this embodiment of this application.

In an embodiment, the channel characteristic map management apparatus may construct a channel characteristic map based on the first message.

For example, the channel characteristic map management apparatus may construct a channel characteristic map based on the material or the electromagnetic coefficient of the first scatterer, the relative position relationship between the first scatterer and the access network device and/or the relative position relationship between the first scatterer and the first terminal device.

For another example, the channel characteristic map management apparatus may construct a channel characteristic map based on the material or the electromagnetic coefficient of the first scatterer, the relative position relationship between the first scatterer and the access network device and/or the relative position relationship between the first scatterer and the first terminal device, the channel multipath information, and the configuration information of the access network device.

For another example, the channel characteristic map management apparatus may construct a channel characteristic map based on the material or the electromagnetic coefficient of the first scatterer, the relative position relationship between the first scatterer and the access network device and/or the relative position relationship between the first scatterer and the first terminal device, the channel multipath information, the configuration information of the access network device, outline information of the first scatterer, the mobility identifier of the first scatterer, the moving speed information of the first scatterer, and the moving direction information of the first scatterer.

The material or the electromagnetic coefficient of the first scatterer can improve accuracy of electromagnetic calculation, and constructing the channel characteristic map based on the first message can effectively improve construction accuracy of the channel characteristic map.

Optionally, the channel characteristic map management apparatus may construct a channel characteristic map by using a method such as full-wave simulation or ray tracing. A channel characteristic map constructed by using the full-wave simulation method has relatively high calculation complexity, relatively high requirements on compute resources and time, and relatively high accuracy of the obtained channel characteristic map. A channel characteristic map constructed by using the ray tracing method has relatively low calculation complexity, relatively low requirements on compute resources and time, and relatively high efficiency of the obtained channel characteristic map.

Optionally, the channel characteristic map management apparatus may further construct a channel characteristic map for the complex multipath area and the simple multipath area by using different methods, to obtain a high-accuracy channel characteristic map in a simple and efficient manner.

For example, for the complex multipath area, a channel characteristic map is constructed by using the full-wave simulation method with relatively high calculation complexity, to obtain the high-accuracy channel characteristic map. For the simple multipath area, a channel characteristic map is constructed by using the ray tracing method with relatively low calculation complexity, to obtain the high-accuracy channel characteristic map, and a requirement on the compute resource and time can be reduced.

In another embodiment, the channel characteristic map management apparatus may also update the channel characteristic map based on the first message.

For example, the channel characteristic map management apparatus may update the channel characteristic map based on the material or the electromagnetic coefficient of the first scatterer, the relative position relationship between the first scatterer and the access network device and/or the relative position relationship between the first scatterer and the first terminal device.

For another example, the channel characteristic map management apparatus may update the channel characteristic map based on the material or the electromagnetic coefficient of the first scatterer, the relative position relationship between the first scatterer and the access network device and/or the relative position relationship between the first scatterer and the first terminal device, the channel multipath information, and the configuration information of the access network device.

For another example, the channel characteristic map management apparatus may update the channel characteristic map based on the material or the electromagnetic coefficient of the first scatterer, the relative position relationship between the first scatterer and the access network device and/or the relative position relationship between the first scatterer and the first terminal device, the channel multipath information, the configuration information of the access network device, outline information of the first scatterer, the mobility identifier of the first scatterer, the moving speed information of the first scatterer, and the moving direction information of the first scatterer.

For another example, the channel characteristic map management apparatus may update the channel characteristic map based on the first channel measurement result. In this way, the channel characteristic map management apparatus does not need to calculate channel characteristic information by using a method such as full-wave simulation or ray tracing, and an update speed is high.

The material or the electromagnetic coefficient of the first scatterer can improve accuracy of electromagnetic calculation, and updating the channel characteristic map based on the first message can effectively improve construction accuracy of the channel characteristic map.

Optionally, the channel characteristic map management apparatus may update all channel characteristic maps based on the first message, or may update some channel characteristic maps based on the first message.

Optionally, the channel characteristic map management apparatus may update only a grid corresponding to an area wheredynamical change occurs on the channel characteristic map.

For example, as shown in FIG. 8, the channel characteristic map includes the first scatterer, the second scatterer, a third scatterer, and a fourth scatterer. The first scatterer, the second scatterer, and the third scatterer are dynamic scatterers, for example, driving cars, bicycles, or the like. An area defined by connection lines between the first scatterer, the second scatterer, and the third scatterer is a dynamically changing area M, and the channel characteristic map management apparatus may update only a channel characteristic map corresponding to a grid including the dynamically changing area M. The dynamically changing area M may be determined based on outline information of the first scatterer, the second scatterer, and the third scatterer. For example, the dynamically changing area M is determined based on outline coordinates of the first scatterer, the second scatterer, and the third scatterer.

Optionally, the channel characteristic map management apparatus may update the channel characteristic map based on the first message by using a method such as full-wave simulation or ray tracing.

Specifically, channel characteristic information of the grid including the dynamically changing area M is obtained through calculation based on the first message by using the method such as full-wave simulation or ray tracing, and channel characteristic information of the corresponding grid in the channel characteristic map is updated to the channel characteristic information obtained through calculation.

Alternatively, when the first message includes the first channel measurement result, the channel characteristic map management apparatus may update channel characteristic information of a grid corresponding to a position of a first terminal device with a high signal-to-noise ratio in the channel characteristic map to channel characteristic information of a grid corresponding to a position of the first terminal device in the first channel measurement result. In this way, the channel characteristic map management apparatus obtains the channel characteristic information without complex calculation, and an update speed is high.

S105: The access network device transmits a first channel characteristic map request message to the channel characteristic map management apparatus.

Optionally, the first channel characteristic map request message may be a request for all channel characteristic maps, or may be a request for a channel characteristic map corresponding to an area within the coverage of the access network device, or may be a request for a channel characteristic map corresponding to an area within the coverage of another access network device adjacent to the access network device, or may be a request for a channel characteristic map corresponding to the position of the first terminal device, or may be a request for a channel characteristic map corresponding to a grid within a specific distance range of the first terminal device. The first channel characteristic map request message may be a request for a channel characteristic map at another position. This is not specifically limited in this embodiment of this application.

For example, the channel characteristic map includes nine grids, the coverage of the access network device includes the first to the sixth grids, and the first terminal device is located in the second grid. In this case, the first channel characteristic map request message may request channel characteristic maps of all the nine grids, or may request channel characteristic maps of the first to the sixth grids within the coverage of the access network device, or may request a channel characteristic map located in the second grid.

S106: The channel characteristic map management apparatus transmits a channel characteristic map corresponding to the access network device to the access network device.

Optionally, the channel characteristic map management apparatus may transmit the channel characteristic map to the access network device, or may transmit a channel characteristic map grid index to the access network device.

S107: The first terminal device transmits a second channel characteristic map request message to the access network device.

Optionally, the second channel characteristic map request message may be a request for all channel characteristic maps, or may be a request for the channel characteristic map corresponding to the position of the first terminal device, or may be a request for the channel characteristic map corresponding to the grid within the specific distance range of the first terminal device. The second channel characteristic map request message may be a request for a channel characteristic map corresponding to another position. This is not specifically limited in this embodiment of this application.

For example, the channel characteristic map includes nine grids, and the first terminal device is located in the second grid. In this case, the second channel characteristic map request message may request channel characteristic maps of all the nine grids, or may request a channel characteristic map corresponding to the second grid, or may request a channel characteristic map corresponding to the fifth grid.

S108: The access network device transmits the channel characteristic map corresponding to the first terminal device to the first terminal device.

Optionally, the access network device may transmit, by using an RRC, a MAC-CE, a PDSCH, a PDCCH, or the like, the channel characteristic map corresponding to the first terminal device to the first terminal device.

Optionally, the access network device may transmit the channel characteristic map to the first terminal device, or may transmit the channel characteristic map grid index to the first terminal device.

In an embodiment, steps S105 to S108 are merely an example. This embodiment of this application may not include steps S105 to S108. This is not specifically limited in this embodiment of this application.

In this way, the access network device or the first terminal device can obtain a required high-accuracy channel characteristic map, to implement channel measurement with low pilot overheads, and resolve a problem that pilot measurement resources in a wireless communication system are limited.

Optionally, the access network device may design, based on the high-accuracy channel characteristic map, a dynamic refined codebook that matches a regional channel characteristic, to improve codebook accuracy; and design a regionalized pilot pattern, to reduce pilot overheads. The access network device may further obtain prior channel information based on the high-accuracy channel characteristic map, and obtain high-dimensional channel information by ultra-low-dimensional measurement, for example, by enabling warm-start high-accuracy Bayesian channel estimation, designing an observation matrix to reduce observation volume needed for compression sensing channel estimation, and the like.

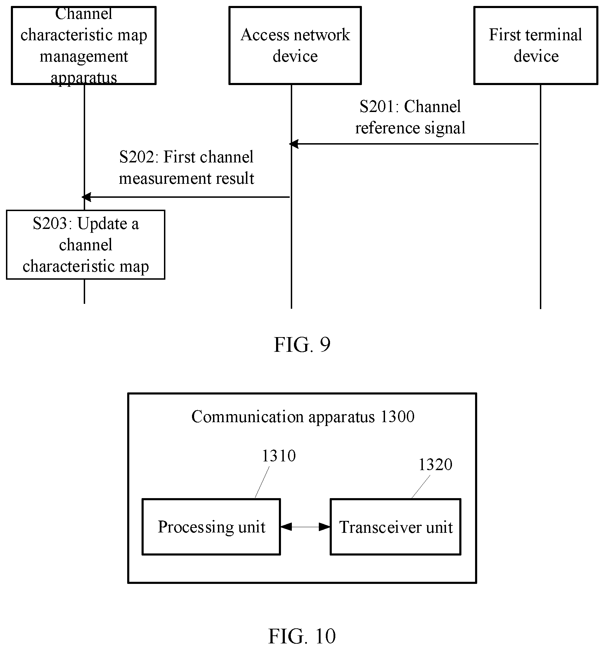

Optionally, after the channel characteristic map is constructed, a flowchart of a method for updating the channel characteristic map by the channel characteristic map management apparatus based on the first channel measurement information may be shown in FIG. 9. The channel characteristic map update method may be applicable to the communication system shown in FIG. 2.

As shown in FIG. 9, the channel characteristic map determination method includes the following steps.

S201: A first terminal device transmits a channel reference signal to an access network device.

Optionally, the first terminal device may transmit the SRS to the access network device.

S202: The access network device obtains a channel measurement result through calculation, and transmits the channel measurement result to a channel characteristic map management apparatus.

Optionally, the access network device may analyze the SRS from the first terminal device, and estimate channel measurement data.

Optionally, the access network device may transmit a CSI-RS to the first terminal device, and the first terminal device may receive and decode the CSI-RS to estimate the channel measurement data. After obtaining the channel measurement data through estimation, the first terminal device may transmit the channel measurement data to the access network device. A method for obtaining the channel measurement data is not specifically limited in this application.

Optionally, the access network device may further obtain, through calculation based on the channel measurement data, a signal to interference and noise ratio of a channel at a position of each terminal device. When the signal to interference and noise ratio of the channel at the position of the terminal device is greater than a preset threshold, the access network device may obtain, through calculation based on the channel measurement data, a first channel measurement result at the position of the terminal device.

Specifically, the access network device may calculate the first channel measurement result based on the first channel measurement data by using an SAGE algorithm.

It should be understood that the access network device may further obtain the first channel measurement result through calculation based on another algorithm. This is not specifically limited in this embodiment of this application.

S203: The channel characteristic map management apparatus updates the channel characteristic map based on the first channel measurement result.

Optionally, the channel characteristic map management apparatus may update channel characteristic information of a grid corresponding to a position of a first terminal device with a high signal-to-noise ratio in the channel characteristic map to channel characteristic information of a grid corresponding to a position of the first terminal device in the first channel measurement result. In this way, the channel characteristic map management apparatus obtains the channel characteristic information without complex calculation, and an update speed is high.

It should be noted that the foregoing plurality of embodiments may be combined, and a combined solution is implemented. Optionally, some operations in processes of the foregoing method embodiments are randomly combined, and/or a sequence of some operations is randomly changed. In addition, an execution sequence between steps of each procedure is merely an example, and does not constitute a limitation on an execution sequence between the steps. The steps may alternatively be performed in another execution sequence. This is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

It may be understood that, to implement functions in the foregoing embodiments, the channel characteristic map management apparatus, the access network device, and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

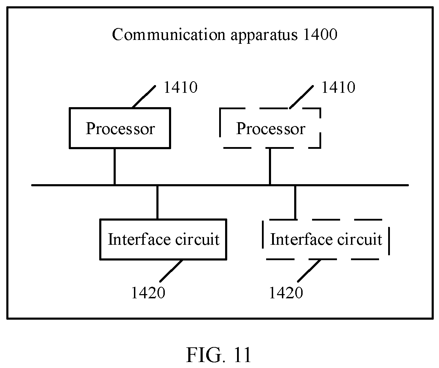

FIG. 10 and FIG. 11 are diagrams of possible structures of communication apparatuses according to embodiments of this application. These communication apparatuses may be configured to implement functions of the channel characteristic map management apparatus, the terminal, or the access network device in the foregoing method embodiments, and therefore can also implement beneficial effects of the foregoing method embodiments. In embodiments of this application, the communication apparatus may be a channel characteristic map management apparatus or a terminal, or may be an access network device, or may be a module (such as a chip) used in the channel characteristic map management apparatus, the terminal, or the access network device.

As shown in FIG. 10, a communication apparatus 1300 includes a processing unit 1310 and a transceiver unit 1320. The communication apparatus 1300 is configured to implement the functions of the channel characteristic map management apparatus, the terminal, or the access network device in the method embodiments shown in FIG. 5 and FIG. 9.

When the communication apparatus 1300 is configured to implement functions of the channel characteristic map management apparatus in the method embodiment shown in FIG. 5, the transceiver unit 1320 is configured to transmit a first request to the access network device and/or transmit a second request to the first terminal device; the transceiver unit 1320 is further configured to receive a first message from the access network device; and the transceiver unit 1320 is further configured to: receive a first channel characteristic map request message from the access network device, and transmit a corresponding channel characteristic map to the access network device in response to the message. The processing unit 1310 is configured to perform a processing-related function. For example, the processing unit 1310 may be configured to: perform all operations performed by a communication apparatus other than receiving and transmitting operations in the embodiment shown in FIG. 5, and/or support another process of the technology described in this specification, for example, determine a channel characteristic map based on the first message.

When the communication apparatus 1300 is configured to implement functions of the access network device in the method embodiment shown in FIG. 5, the transceiver unit 1320 is configured to: receive a first request from the channel characteristic map management apparatus, and transmit a first message to the channel characteristic map management apparatus in response to the request; the transceiver unit 1320 is further configured to receive a second message from the first terminal device; the transceiver unit 1320 is further configured to transmit a first channel characteristic map request message to the channel characteristic map management apparatus, and receive a requested channel characteristic map; and the transceiver unit 1320 is further configured to: receive a second channel characteristic map request message from the first terminal device, and transmit a corresponding channel characteristic map to the first terminal device in response to the message. The processing unit 1310 is configured to perform a processing-related function. For example, the processing unit 1310 may be configured to: perform all operations performed by a communication apparatus other than receiving and transmitting operations in the embodiment shown in FIG. 5, and/or support another process of the technology described in this specification, for example, obtain the first message based on the second message.

When the communication apparatus 1300 is configured to implement functions of the first terminal device in the method embodiment shown in FIG. 5, the transceiver unit 1320 is configured to: receive a second request from the channel characteristic map management apparatus, and transmit a second message to the access network device in response to the request; the transceiver unit 1320 is further configured to: transmit a second channel characteristic map request message to the access network device, and receive a requested channel characteristic map; and the processing unit 1310 is configured to perform a processing-related function. For example, the processing unit 1310 may be configured to: perform all operations performed by a communication apparatus other than receiving and transmitting operations in the embodiment shown in FIG. 5, and/or support another process of the technology described in this specification.

When the communication apparatus 1300 is configured to implement functions of the channel characteristic map management apparatus in the method embodiment shown in FIG. 9, the transceiver unit 1320 is configured to receive a first channel measurement result from the access network device, and the processing unit 1310 is configured to perform a processing-related function. For example, the processing unit 1310 may be configured to: perform all operations performed by a communication apparatus other than receiving and transmitting operations in the embodiment shown in FIG. 5, and/or support another process of the technology described in this specification, for example, determine a channel characteristic map based on the first channel measurement result.

When the communication apparatus 1300 is configured to implement functions of the access network device in the method embodiment shown in FIG. 9, the transceiver unit 1320 is configured to receive a channel reference signal from the first terminal device, and the transceiver unit 1320 is further configured to transmit a first channel measurement result to the channel characteristic map management apparatus. The processing unit 1310 is configured to perform a processing-related function. For example, the processing unit 1310 may be configured to: perform all operations performed by a communication apparatus other than receiving and transmitting operations in the embodiment shown in FIG. 5, and/or support another process of the technology described in this specification, for example, obtain the first channel measurement result based on the channel reference signal.

When the communication apparatus 1300 is configured to implement functions of the first terminal device in the method embodiment shown in FIG. 9, the transceiver unit 1320 is configured to transmit a channel reference signal to the access network device, and the processing unit 1310 is configured to perform a processing-related function. For example, the processing unit 1310 may be configured to: perform all operations performed by a communication apparatus other than receiving and transmitting operations in the embodiment shown in FIG. 5, and/or support another process of the technology described in this specification.

For more detailed descriptions of the processing unit 1310 and the transceiver unit 1320, refer to related descriptions in the method embodiments shown in FIG. 5 and FIG. 9. The processing unit 1310 and the transceiver unit 1320 may further perform another step. Specific implementation may refer to the method embodiments, and details are not described herein again.

Optionally, the transceiver unit 1320 may be a transceiver, and the transceiver may include an antenna, a radio frequency circuit, and the like.

The processing unit 1310 may be a processor (or a processing circuit), for example, a baseband processor. The baseband processor may include one or more CPUs.

As shown in FIG. 11, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method shown in FIG. 5 or FIG. 9, the processor 1410 is configured to implement functions of the processing unit 1310, and the interface circuit 1420 is configured to implement functions of the transceiver unit 1320.

When the communication apparatus is a chip used in a channel characteristic map management apparatus, the chip in the channel characteristic map management apparatus implements functions of the channel characteristic map management apparatus in the foregoing method embodiment. That the chip in the channel characteristic map management apparatus receives information from an access network device may be understood as that the information is first received by other modules (for example, a radio frequency module or an antenna) in the channel characteristic map management apparatus, and then sent by these modules to the chip in the channel characteristic map management apparatus. That the chip in the channel characteristic map management apparatus transmits information to the access network device may be understood as that the information is first sent to other modules (for example, a radio frequency module or an antenna) in the channel characteristic map management apparatus, and then sent by these modules to the access network device and/or a terminal.

When the communication apparatus is a chip used in the terminal, the chip in the terminal implements functions of the terminal in the method embodiments. That the chip in the terminal receives information from the access network device may be understood as that the information is first received by other modules (for example, a radio frequency module or an antenna) in the terminal, and then sent by these modules to the chip in the terminal. That the chip in the terminal transmits information to the access network device may be understood as that the information is first sent to other modules (for example, a radio frequency module or an antenna) in the terminal, and then sent by these modules to the access network device.

When the communication apparatus is a chip used in the access network device, the chip in the access network device implements functions of the access network device in the foregoing method embodiments. That the chip in the access network device receives information from the terminal and/or the channel characteristic map management apparatus may be understood as that the information is first received by other modules (for example, a radio frequency module or an antenna) in the access network device, and then sent by these modules to the chip in the access network device. That the chip in the access network device chip transmits information to the terminal and/or the channel characteristic map management apparatus may be understood as that the information is delivered to other modules (such as a radio frequency module or an antenna) in the access network device, and then sent by these modules to the terminal and/or the channel characteristic map management apparatus.

The communication device shown in FIG. 10 or FIG. 11 is merely an example. During actual application, the communication device may have more or fewer components than those shown in FIG. 10 or FIG. 11, may combine two or more components, or may have different component configurations.

In this application, that an entity A transmits information to an entity B may be that A directly transmits the information to B, or may be that A indirectly transmits the information to B via another entity. Similarly, that the entity B receives information from the entity A may be that the entity B directly receives information sent by the entity A, or may be that the entity B indirectly receives information sent by the entity A via another entity. The entity A and the entity B herein each may be a RAN node or a terminal, or may be a module in a RAN node or a terminal. Information transmitting and receiving may be information exchange between the RAN node and the terminal, for example, information exchange between a base station and the terminal. Information transmitting and receiving may alternatively be information exchange between two RAN nodes, for example, information exchange between a CU and a DU. Information transmitting and receiving may alternatively be information exchange between different modules in an apparatus, for example, information exchange between a terminal chip and another module of the terminal, information exchange between an access network chip and another module in the access network, or information exchange between a chip in a channel characteristic map management apparatus and another module in the channel characteristic map management apparatus.

It may be understood that, a processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in a base station or a terminal. The processor and the storage medium may alternatively exist in a base station or a terminal as discrete components.

All or some of the foregoing embodiments may be implemented by software, hardware, firmware, or any combination thereof. When software is used to implement embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A channel characteristic map determination method, applied to a channel characteristic map management apparatus, comprising:
receiving, from an access network device, a first message, wherein the first message comprises first information, the first message further comprises at least one of second information and third information, the first information indicates a material of a first scatterer or an electromagnetic coefficient of the first scatterer, the second information indicates a relative position relationship between the first scatterer and a first terminal device, and the third information indicates a relative position relationship between the first scatterer and the access network device; and
determining, based on the first message, a channel characteristic map, wherein the channel characteristic map comprises a plurality of grids on a geographical position basis and channel characteristic information corresponding to each of the plurality of grids.

2. The method according to claim 1, further comprising:
receiving, from the access network device, a first channel characteristic map request message, wherein the first channel characteristic map request message is used to request to transmit a channel characteristic map corresponding to the first terminal device or the access network device; and
transmitting, to the access network device, a channel characteristic map response message, wherein the channel characteristic map response message comprises the channel characteristic map corresponding to the first terminal device or the access network device.

3. The method according to claim 1 or 2, wherein the first message further comprises outline information of the first scatterer.

4. The method according to any one of claims 1 to 3, wherein the first message further comprises channel multipath information, and the channel multipath information comprises at least one of multipath quantity information, multipath angular spread information, and multipath delay spread information.

5. The method according to any one of claims 1 to 4, wherein the first message further comprises configuration information of the access network device, the configuration information of the access network device comprises position information of the access network device and/or antenna information of the access network device, and the antenna information comprises at least one of antenna height information, antenna size information, antenna type information, antenna downtilt angle information, antenna pattern information, and antenna main lobe direction information.

6. The method according to any one of claims 1 to 5, wherein the first message further comprises at least one of a mobility identifier of the first scatterer, moving speed information of the first scatterer, and moving direction information of the first scatterer.

7. The method according to any one of claims 1 to 6, wherein the first message further comprises a first channel measurement result, and the first channel measurement result comprises at least one of channel state information, channel statistical covariance matrix information, channel angular power spectrum information, channel power delay spectrum information, and channel path loss information.

8. The method according to any one of claims 1 to 7, further comprising, before receiving the first message:
transmitting, to the first terminal device, a first request, wherein the first request indicates the access network device to transmit the first message; or
transmitting, to the first terminal device, a second request, wherein the second request indicates the first terminal device to transmit a second message, and the second message comprises the first information and the second information.

9. A channel characteristic map construction method, applied to an access network device, comprising:
transmitting, to a channel characteristic map management apparatus, a first message, wherein the first message comprises first information, the first message further comprises at least one of second information and third information, the first information indicates a material of a first scatterer or an electromagnetic coefficient of the first scatterer, the second information indicates a relative position relationship between the first scatterer and a first terminal device, and the third information indicates a relative position relationship between the first scatterer and the access network device.

10. The method according to claim 9, further comprising:
receiving, from the first terminal device, a second message, wherein the second message comprises the first information and the second information.

11. The method according to claim 9 or 10, further comprising:
transmitting, to the channel characteristic map management apparatus, a first channel characteristic map request message, wherein the first channel characteristic map request message is used to request to transmit a channel characteristic map corresponding to the first terminal device or the access network device; and
receiving, from the channel characteristic map management apparatus, a first channel characteristic map response message, wherein the first channel characteristic map response message comprises the channel characteristic map corresponding to the first terminal device or the access network device.

12. The method according to any one of claims 9 to 11, further comprising:
receiving, from the first terminal device, a second channel characteristic map request message, wherein the second channel characteristic map request message is used to request to transmit the channel characteristic map corresponding to the first terminal device; and
transmitting, to the first terminal device, a second channel characteristic map response message, wherein the second channel characteristic map response message comprises the channel characteristic map corresponding to the first terminal device.

13. The method according to any one of claims 9 to 12, wherein the first message further comprises fourth information, and the fourth information indicates an outline of the first scatterer.

14. The method according to any one of claims 9 to 13, wherein the second message further comprises the fourth information, and the fourth information indicates the outline of the first scatterer.

15. The method according to any one of claims 9 to 14, wherein the first message further comprises channel multipath information, and the channel multipath information indicates at least one of multipath quantity information, angular spread information, and delay spread information.

16. The method according to any one of claims 9 to 15, wherein the second message further comprises channel multipath information of a position of the first terminal device, and the channel multipath information indicates at least one of the multipath quantity information, the angular spread information, and the delay spread information.

17. The method according to any one of claims 9 to 16, wherein the first message further comprises configuration information of the access network device; and
the configuration information of the access network device comprises at least one of position information of the access network device, an antenna height of the access network device, an antenna size of the access network device, an antenna type of the access network device, an antenna downtilt angle of the access network device, an antenna pattern of the access network device, and an antenna main lobe direction of the access network device.

18. The method according to any one of claims 9 to 17, wherein the first message further comprises at least one of a mobility identifier of the first scatterer, a moving speed of the first scatterer, and a moving direction of the first scatterer.

19. The method according to any one of claims 9 to 18, wherein the second message further comprises at least one of the mobility identifier of the first scatterer, the moving speed of the first scatterer, and the moving direction of the first scatterer.

20. The method according to any one of claims 9 to 19, wherein the first message further comprises a first channel measurement result, and the first channel measurement result comprises at least one of channel state information, channel statistical covariance matrix information, channel angular power spectrum information, channel power delay spectrum information, and channel path loss information.

21. The method according to any one of claims 9 to 20, further comprising, before transmitting the first message:
receiving a first request, wherein the first request indicates the access network device to transmit the first message.

22. A channel characteristic map construction method, applied to a first terminal device, comprising:
transmitting, to an access network device, a second message, wherein the second message comprises first information and second information, the first information indicates a material of a first scatterer or an electromagnetic coefficient of the first scatterer, and the second information indicates a relative position relationship between the first scatterer and the first terminal device.

23. The method according to claim 22, further comprising:
transmitting, to the access network device, a second channel characteristic map request message, wherein the second channel characteristic map request message is used to request to transmit a channel characteristic map corresponding to the first terminal device; and
receiving, from the access network device, a channel characteristic map response message, wherein the channel characteristic map response message comprises the channel characteristic map corresponding to the first terminal device.

24. The method according to claim 22 or 23, wherein the second message further comprises fourth information, and the fourth information indicates an outline of the first scatterer.

25. The method according to any one of claims 22 to 24, wherein the second message further comprises channel multipath information, and the channel multipath information indicates at least one of multipath quantity information, angular spread information, and delay spread information.

26. The method according to any one of claims 22 to 25, wherein the second message further comprises at least one of a mobility identifier of the first scatterer, a moving speed of the first scatterer, and a moving direction of the first scatterer.

27. A communication apparatus, comprising a processor and an interface circuit, wherein
the interface circuit is configured to: receive a signal from another communication apparatus and transmit the signal to the processor, or transmit a signal from the processor to the another communication apparatus, and
the processor is configured to implement, by using a logic circuit or by executing code instructions, the method according to any one of claims 1 to 8, the method according to any one of claims 9 to 21, or the method according to any one of claims 22 to 26.

28. A computer-readable storage medium, wherein the storage medium stores a computer program or instructions, and when the computer program or the instructions are executed by a communication apparatus, the method according to any one of claims 1 to 8 is implemented, the method according to any one of claims 9 to 21 is implemented, or the method according to any one of claims 22 to 26 is implemented.
